# EUROPÄISCHE PATENTANMELDUNG

(11) **EP 4 388 946 A1**
(43) Veröffentlichungstag der Anmeldung: **26.06.2024**
(21) Anmeldenummer: 23214678.7
(22) Anmeldetag: 06.12.2023
(51) Int. Cl.: A47J 31/36, A47J 31/52

(54) **KAFFEEZUBEREITUNGSEINRICHTUNG UND VERFAHREN ZUR ERMITTLUNG EINER VERPRESSKRAFT UND EINES BRÜHDRUCKS MIT EINER SOLCHEN KAFFEEZUBEREITUNGSEINRICHTUNG**

(30) Priorität: 21.12.2022 DE 102022214164
(71) Anmelder: BSH Hausgeräte GmbH, 81739 München (DE)
(72) Erfinder: Fisch, Markus, 84326 Falkenberg (DE)

(57) **Zusammenfassung**

Die Erfindung betrifft eine Kaffeezubereitungseinrichtung (1),
- mit einem Bauteil, insbesondere einem Gehäuse (2), einer Kraftmesseinrichtung (3) und einem beweglichen Stößel (5),
- mit einem verstellbaren Brühtopf (6), in welchen der Stößel (5) eingreift, die zusammen eine Brühkammer (7) begrenzen,
- wobei der Brühtopf (6) einen in die Brühkammer (7) führenden Wasserzulauf (9) aufweist, über welchen mit Druck beaufschlagtes Wasser in die Brühkammer (7) einleitbar ist,
- wobei die Kraftmesseinrichtung (3) zur Erfassung einer bei einem Verstellen des Brühtopfes (6) auftretenden auf Kaffeepulver (8) einwirkenden Verpresskraft F1 und einer durch anschließendes Einleiten von Wasser auf den Stößel (5) wirkenden Gesamtkraft F2 ausgebildet ist,
- mit einer Auswerte-/Steuereinrichtung (11), die derart ausgebildet ist, dass sie über eine Differenz F2 - F1 der von der Kraftmesseinrichtung (3) gemessenen Kräfte F2, F1 und einer der Brühkammer (7) zugewandten Fläche (A) des Stößels (5) einen Brühdruck p = (F2-F1)/A in der Brühkammer (7) ermittelt.

## Beschreibung

Die vorliegende Erfindung betrifft eine Kaffeezubereitungseinrichtung und ein Verfahren zur Ermittlung einer Verpresskraft und eines Brühdrucks in einer Brühkammer einer solchen Kaffeezubereitungseinrichtung.

Die Verpresskraft, mit welcher gemahlener Kaffee (Kaffeepulver) vor dem eigentlichen Brühen in einer Brühkammer zusammengedrückt wird, ist ein signifikanter Faktor für die Kaffeequalität. Um diese Verpresskraft zu messen und zu regeln, wird derzeit ein Motorstrom eines Brüheinheitenantriebs gemessen und daraus die Verpresskraft berechnet. Dies ist jedoch mit vielen Toleranzen behaftet, wie beispielsweise einem Wirkungsgrad einer Spindel, einem Wirkungsgrad eines Getriebes, einer Motorentoleranz, einer Toleranz einer Strommessung, etc. und daher relativ ungenau.

Bei einer Kniehebelbrüheinheit erfolgt die Verpressung über eine zusätzliche Feder und kann nur bedingt nachgestellt werden. Zusätzlich ist der Brühdruck ein wichtiger Faktor für die Kaffeequalität. Dieser wird zurzeit gar nicht gemessen und lediglich über die Auslegung eines Crema-Ventils bestimmt. Ein derartiges Crema-Ventil ist üblicherweise im Anschluss an die Brühkammer im Kaffeeauslauf eingebaut. Während des Brühvorgangs verhindert zunächst üblicherweise eine Feder des Crema-Ventils eine Ausgabe des Kaffeegetränks. Wird die Federkraft und damit die Schließkraft des Crema-Ventils jedoch überschritten, öffnet dieses und eine kleine Menge Kaffee strömt in den Auslauf. Dadurch wird der Druck in der Brühkammer solange reduziert, bis die Feder das Crema-Ventil wieder schließt. Dieser Vorgang führt zu einer starken Verwirbelung des Kaffees, was sich in mehr Crema niederschlägt.

Nachteilig bei bisherigen Kaffeezubereitungseinrichtungen ist, dass ohne eine genaue Erfassung einer Verpresskraft und eines Brühdrucks die Herstellung von Kaffeegetränken mit gleichbleibend hoher Qualität nicht oder nur schwierig möglich ist.

Die vorliegende Erfindung beschäftigt sich daher mit dem Problem, eine Kaffeezubereitungseinrichtung anzugeben, mittels welcher insbesondere Kaffeegetränke mit gleichbleibend hoher Qualität einfacher herstellbar sind.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Verpresskraft direkt über eine an einem Stößel angeordnete Kraftmesseinrichtung zu erfassen und eine erhöhte Gesamtkraft auf diesen Stößel, ausgelöst durch einen in einer Brühkammer auftretenden Brühdruck, ebenfalls über die Kraftmesseinrichtung zu bestimmen, um anschließend den in der Brühkammer herrschenden Brühdruck daraus zu errechnen. Die erfindungsgemäße Kaffeezubereitungseinrichtung besitzt dabei ein Bauteil, insbesondere ein Gehäuse, sowie einen daran über die vorher genannte Kraftmesseinrichtung, beispielsweise eine Wägeeinrichtung oder einen Dehnungsmessstreifen, angeordneten Stößel. Ebenfalls vorgesehen ist ein in einer vordefinierten Richtung, üblicherweise in einer Vertikalrichtung, verstellbarer Brühtopf, in welchen der Stößel bei dem eigentlichen Brühvorgang eingreift. Der Brühtopf sowie der darin eintauchende Stößel begrenzen dabei eine Brühkammer, in welcher während eines Brühvorgangs gemahlener Kaffee (Kaffeepulver) angeordnet ist. Zudem weist der Brühtopf einen in die Brühkammer führenden Wasserzulauf auf, über welchen mit Druck beaufschlagtes Wasser in die Brühkammer einleitbar ist. Die Kraftmesseinrichtung ist dabei erfindungsgemäß zur Erfassung einer bei einem Verstellen des Brühtopfes in der vordefinierten Richtung auf den Stößel zu auftretenden und auf in der Brühkammer angeordnetes Kaffeepulver einwirkenden Verpresskraft F1 sowie einer durch anschließendes Einleiten von druckbeaufschlagtem Wasser in die Brühkammer auf den Stößel wirkenden Gesamtkraft F2 ausgebildet. Die Verpresskraft F1 wird dabei dadurch bewirkt, dass der Brühtopf in Richtung des Stößels bewegt wird, sodass das in der Brühkammer angeordnete Kaffeepulver zunehmend komprimiert wird. Der Stößel taucht dabei in den Brühtopf ein, wodurch bei einem zunehmenden Verstellen des Brühtopfes, das in der Brühkammer angeordnete Kaffeepulver zunehmend verdichtet wird und dadurch eine zunehmende Kraft, nämlich die Verpresskraft F1, auf den Stößel wirkt. Diese rein mechanisch durch das Verstellen des Brühtopfes bewirkte Verpresskraft F1 wird dabei von der Kraftmesseinrichtung erfasst. Ist das Kaffeepulver in der Brühkammer mit einer, insbesondere vordefinierten, Verpresskraft F1 verpresst, wird zum Brühen des Kaffees, beispielsweise eines Espresso, Wasser unter Druck in die Brühkammer eingeleitet. Das unter Druck in die Brühkammer eingeleitete Wasser erhöht die auf den Stößel und damit die Kraftmesseinrichtung einwirkende Kraft und führt zu der auf den Stößel und die Kraftmesseinrichtung wirkenden Gesamtkraft F2, welche zusätzlich von der Kraftmesseinrichtung erfasst wird. Erfindungsgemäß ist nun zudem eine Auswerte-/Steuereinrichtung vorgesehen, die derart ausgebildet ist, dass sie über eine Differenz F2 - F1 der von der Kraftmesseinrichtung gemessenen Kräfte F2, F1 und einer der Brühkammer zugewandten Fläche A des Stößels einen Brühdruck p = (F2-F1)/A in der Brühkammer errechnet bzw. ermittelt. Die durch das druckbeaufschlagte Wasser resultierende Gesamtkraft F2 ist dabei größer als die Verpresskraft F1, sodass die Differenz F2 - F1 stets größer null ist. Die Gesamtkraft F2 bildet somit die Summe aus der eigentlichen Verpresskraft F1 und der durch das Einleiten von druckbeaufschlagtem Wasser in die Brühkammer resultierenden Kraft. Durch die erfindungsgemäße Kaffeezubereitungseinrichtung ist es somit vergleichsweise einfach, insbesondere auch ohne zusätzliche und teure sowie aufwendig zu verkabelnde Drucksensoren möglich, sowohl die Verpresskraft F1 als auch den Brühdruck p in der Brühkammer zuverlässig zu bestimmen, was erheblichen Einfluss auf die Qualität der herzustellenden Kaffeegetränke hat. Insbesondere können durch den mit der Auswerte-/Steuereinrichtung ermittelten Brühdruck p weitere Parameter der Kaffeezubereitungseinrichtung, wie beispielsweise eine Brühgeschwindigkeit, ein Mahlgrad oder andere Faktoren beeinflusst werden, wodurch die Herstellung von Kaffeegetränken mit gleichbleibend hoher Qualität einfacher möglich ist.

Bei einer weiteren vorteilhaften Ausführungsform der erfindungsgemäßen Kaffeezubereitungseinrichtung ist in dem Stößel ein Kaffeekanal angeordnet, der über ein Sieb mit der Brühkammer verbunden ist. Eine Ableitung von in der Brühkammer gebrühtem Kaffee erfolgt somit in diesem Fall über den Stößel, wobei zunächst der gebrühte Kaffee das im Stößel integrierte Sieb durchdringt und anschließend den Kaffeekanal im Stößel bis zu einem Auslauf durchläuft. Über das Sieb in dem Stößel wird das Kaffeemehl in der Brühkammer zurückgehalten. Das Sieb kann dabei einen Teil einer der Brühkammer zugewandten Oberfläche des Stößels belegen und kann beispielsweise aus Metall ausgebildet sein. Über eine vordefinierte Feinheit des Siebs kann Einfluss auf den in der Brühkammer entstehenden Brühdruck p genommen werden.

Bei einer weiteren vorteilhaften Ausführungsform der erfindungsgemäßen Kaffeezubereitungseinrichtung ist der Stößel über eine Ringdichtung gegenüber einer Innenwand des Brühtopfes abgedichtet. Eine derartige Ringdichtung ermöglicht eine zuverlässige und insbesondere auch druckdichte Abdichtung der Brühkammer im Übergang zwischen einer Innenwand des Brühtopfes und einer Außenmantelfläche des Stößels. Die Ringdichtung ist dabei derart ausgelegt, dass sie ein dichtes Verfahren des Brühtopfes relativ zum Stößel und damit ein dichtes Eintauchen des Stößels in den Brühtopf ermöglicht. Eine derartige Ringdichtung kann beispielsweise als O-Ringdichtung aus Kunststoff kostengünstig und zugleich qualitativ hochwertig hergestellt werden.

Bei einer besonders bevorzugten Ausführungsform der erfindungsgemäßen Lösung ist die Kraftmesseinrichtung als Wägeeinrichtung/Wägezelle oder als Dehnungsmessstreifen ausgebildet. Derartige Wägezellen sind in anderen Anwendungen bereits langjährig erprobt und ermöglichen beispielsweise über einen elastischen und kraftabhängig verformbaren Federkörper eine äußerst exakte, insbesondere auch digitale Erfassung einer Kraft. Dehnungsmessstreifen können dabei eine rein digitale Erfassung einer darauf aufgebrachten Kraft ermöglichen, indem bereits eine äußerst geringe Verformung den elektrischen Widerstand ändert. Vorteilhaft bei derartigen Dehnungsmessstreifen ist, dass diese nicht nur kostengünstig herstellbar sind, sondern auch mit äußerst geringem Bauraum auskommen. Im Vergleich zu beispielsweise einer Wägezelle bietet dies somit konstruktive Vorteile.

Bei einer weiteren Ausführungsform der Kaffeezubereitungseinrichtung ist die Auswerte-/Steuereinrichtung derart ausgebildet, dass sie eine Verstellbewegung des Brühtopfes in Abhängigkeit des ermittelten Brühdrucks p steuert. Der tatsächlich in der Brühkammer auftretende Brühdruck p wird dabei einerseits von Leistungsdaten einer eingesetzten Wasserpumpe, beispielsweise einem Maximaldruck sowie einer maximal möglichen Fördermenge, bestimmt, sowie andererseits durch einen Durchflusswiderstand des in der Brühkammer angeordneten Kaffeepulvers. Dieser Durchflusswiderstand wird beispielsweise durch eine Durchflussfläche, eine Durchflusslänge, einen Verpressgrad sowie einen Mahlgrad bestimmt und baut sich beim Quellen des Kaffeepulvers auf. Der mittels der Auswerte-/Steuereinrichtung, die mit der Kraftmesseinrichtung kommunizierend verbunden ist, ermittelte Brühdruck p ermöglicht so die Steuerung einer Verstellbewegung des Brühtopfes, worüber beispielsweise die Verpresskraft und darüber auch der Brühdruck in der Brühkammer beeinflussbar sind.

Zusätzlich oder alternativ kann die Auswerte-/Steuereinrichtung auch derart ausgebildet sein, dass sie eine Leistung einer Wasserpumpe in Abhängigkeit des ermittelten Brühdrucks p steuert, sodass bei einem zu hohen ermittelten Brühdruck p beispielsweise die Fördermenge der Wasserpumpe reduziert wird. Hierdurch kann insbesondere ein Geschmack, der maßgeblich abhängig von dem Brühdruck p ist, besser eingestellt werden. Insbesondere kann durch eine Veränderung des Brühdrucks p ein Herauslösen von Bitterstoffen aus dem gemahlenen Kaffeepulver beeinflusst werden, wodurch es insgesamt deutlich einfacher wird, Kaffeegetränke mit gleichbleibend hoher Geschmacksqualität herstellen zu können.

Die vorliegende Erfindung beruht weiter auf dem allgemeinen Gedanken, ein Verfahren zur Ermittlung einer Verpresskraft F1 und eines Brühdrucks p mit einer in den vorherigen Absätzen beschriebenen Kaffeezubereitungseinrichtung anzugeben, bei dem zunächst gemahlener Kaffee in Form von beispielsweise Kaffeemehl oder Kaffeepulver in den Brühtopf eingefüllt wird. Anschließend wird die Brühkammer durch Eintauchen des Stößels in den Brühtopf geschlossen. Wiederum anschließend wird der Brühtopf in der vordefinierten Richtung gegen den Stößel verstellt, sodass der Stößel in den Brühtopf eintaucht und das darin angeordnete Kaffeepulver verdichtet, das heißt tampert. Eine Verstellung des Brühtopfes erfolgt dabei so lange, bis eine vordefinierte Verpresskraft F1 an der zwischen dem Stößel und beispielsweise einem Bauteil, insbesondere einem Gehäuse, angeordneten Kraftmesseinrichtung erreicht wird. Ist die vordefinierte Verpresskraft F1 erreicht, wird Wasser über eine Wasserpumpe gefördert und über den Wasserzulauf in die Brühkammer eingeleitet, wodurch sich ein Brühdruck p aufbaut, der die Kraft auf den Stößel und damit die Kraftmesseinrichtung vergrößert und an letzterer eine Gesamtkraft F2 erzeugt. Diese Gesamtkraft F2 besteht dabei aus der eigentlichen Verpresskraft F1 und der zusätzlich durch den Brühdruck p aufgebauten Kraft.

Die Auswerte-/Steuereinrichtung der erfindungsgemäßen Kaffeezubereitungseinrichtung ermittelt dann eine Differenz aus der Gesamtkraft F2 und der Verpresskraft F1. Diese Differenz F2 - F1 steht für die vom Brühdruck p erzeugte Kraft. Durch die exakt vordefinierte Fläche A des Stößels, mittels welcher dieser in die Brühkammer eintaucht, kann nun der ausschließlich durch den Wasserdruck aufgebaute Brühdruck p als Quotient aus der Differenz F2 - F1 und der Fläche A ermittelt werden. Mit dem erfindungsgemäßen Verfahren ist es somit vergleichsweise einfach möglich, sowohl die mittels mechanischem Verstellen erzeugte Verpresskraft F1 zu ermitteln, als auch die Gesamtkraft F2, die zusätzlich das unter Druck in die Brühkammer eingeleitete Wasser berücksichtigt. Mittels des erfindungsgemäßen Verfahrens ist es somit erstmals möglich, nicht nur die Verpresskraft F1 aktiv und äußerst genau zu bestimmen, sondern zugleich auch die durch den Brühdruck p erzeugte Kraft F2 - F1, wodurch eine Steuerung der erfindungsgemäßen Kaffeezubereitungseinrichtung deutlich mehr Möglichkeiten erhält, sodass insbesondere Kaffeegetränke mit gleichbleibend hoher Qualität einfacher hergestellt werden können.

Bei einer vorteilhaften Weiterbildung des erfindungsgemäßen Verfahrens steuerte die Auswerte-/Steuereinrichtung eine Verstellbewegung des Brühtopfes in Abhängigkeit des ermittelten Brühdrucks p. Ist somit beispielsweise der in der Brühkammer ermittelte Brühdruck p größer als ein vordefinierter Grenzdruck, so kann der Brühtopf geringfügig zurückgefahren und damit der Brühdruck p reduziert werden. Zusätzlich oder alternativ ist es auch denkbar, dass die Auswerte-/Steuereinrichtung eine Wasserzufuhr in die Brühkammer in Abhängigkeit des ermittelten Brühdrucks p steuert, sodass beispielsweise bei einem in der Brühkammer ermittelten Brühdruck p, der oberhalb eines vordefinierten Grenzdrucks liegt, die Wasserzufuhr reduziert und dadurch der Brühdruck p in der Brühkammer ebenfalls reduziert werden kann. Durch die erfindungsgemäße einfache Beeinflussung des Brühdrucks p in der Brühkammer kann insbesondere auf die Bitterkeit des Kaffees einfach Einfluss genommen werden. Dabei können auch noch weitere Parameter, wie beispielsweise eine Brühtemperatur, etc., beeinflusst werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

Es zeigen, jeweils schematisch:
- Fig. 1: eine Schnittdarstellung durch eine mögliche Ausführungsform einer erfindungsgemäßen Kaffeezubereitungseinrichtung,
- Fig. 2: eine schematische Darstellung eines erfindungsgemäßen Verfahrens zur Ermittlung einer Verpresskraft F1 und eines Brühdrucks p mit einer solchen Kaffeezubereitungseinrichtung.

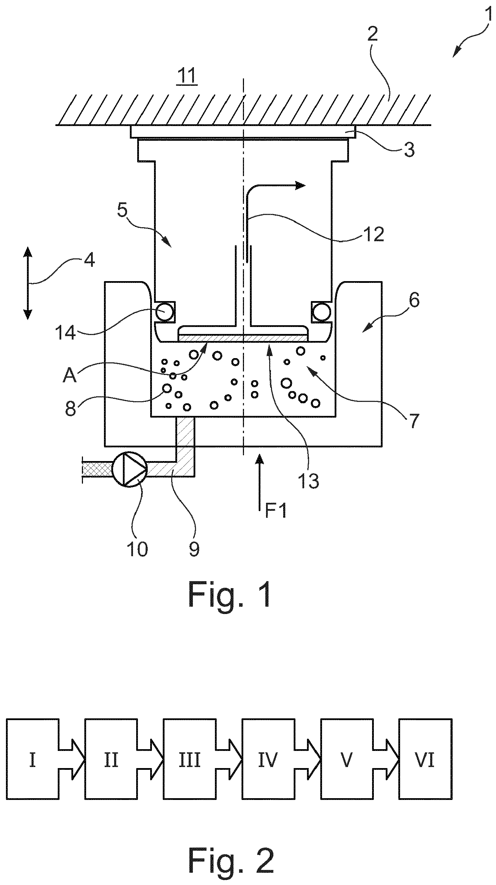

Entsprechend der Figur 1, weist eine erfindungsgemäße Kaffeezubereitungseinrichtung 1 ein Bauteil 2, insbesondere ein Gehäuse, sowie einen daran über eine Kraftmesseinrichtung 3 angeordneten Stößel 5. Ebenfalls vorgesehen ist ein in einer vordefinierten Richtung 4, üblicherweise in Vertikalrichtung, verstellbarer Brühtopf 6, in welchen der Stößel 5 zumindest bei der Herstellung eines Kaffeegetränks eingreift. Der Stößel 5 und der Brühtopf 6 begrenzen dabei eine Brühkammer 7, in welcher bei der Herstellung eines Kaffeegetränks Kaffeepulver 8 angeordnet ist. Das in der Brühkammer 7 angeordnete Kaffeepulver 8 ist entsprechend der Figur 1 lediglich stark schematisierte und lediglich teilweise dargestellt und während des eigentlichen Brühvorgangs verpresst, d. h. komprimiert.

Des Weiteren weist der Brühtopf 6 einen in die Brühkammer 7 führenden Wasserzulauf 9 auf, über welchen beispielsweise mittels einer Wasserpumpe 10 druckbeaufschlagtes Wasser in die Brühkammer 7 förderbar ist. Die Kraftmesseinrichtung 3, welche beispielsweise als Wägeeinrichtung oder als Dehnungsmessstreifen ausgebildet sein kann, ist dabei zur Erfassung einer bei einem Verstellen des Brühtopfes 6 in der vordefinierten Richtung 4, in der gemäß der Figur 1 gezeigten Darstellung nach oben, d. h. auf den Stößel 5 zu, in der Lage, die auf in der Brühkammer 7 angeordnetes Kaffeepulver 8 einwirkende Verpresskraft F1 sowie eine durch Einleiten von druckbeaufschlagtem Wasser in die Brühkammer 7 auf den Stößel 5 erhöhte Gesamtkraft F2 zu erfassen. Des Weiteren vorgesehen ist eine Auswerte-/Steuereinrichtung 11, welche derart ausgebildet ist, dass sie über eine Differenz F2 - F1 der von der Kraftmesseinrichtung 3 gemessenen Kräfte F2, F1 sowie einer der Brühkammer 7 zugewandten Fläche A des Stößels 5 einen Brühdruck p in der Brühkammer 7 ermittelt.

Wie der Figur 1 weiter zu entnehmen ist, ist in dem Stößel 5 ein Kaffeekanal 12 angeordnet, der über ein Sieb 13 mit der Brühkammer 7 verbunden ist. Über das Sieb 13 ist es somit während des Brühvorgangs möglich, den das Kaffeepulver 8 durchdringenden Kaffee in den Kaffeekanal 12 und von diesem zu einem nicht näher gezeichneten Auslauf zu leiten.

Der Stößel 5 ist über eine Ringdichtung 14 gegenüber einer Innenwand des Brühtopfes 7 abgedichtet, sodass der in der Brühkammer 7 auftretende Druck nur über den Kaffeekanal 12 abgeleitet werden kann.

Die Auswerte-/Steuereinrichtung 11 ist zudem derart ausgebildet, dass sie eine Verstellbewegung des Brühtopfes 6 und/oder eine Zufuhr von Wasser in die Brühkammer 7, beispielsweise durch eine Steuerung der Leistung der Wasserpumpe 10, in Abhängigkeit des ermittelten Brühdrucks p steuert. Die Auswerte-/Steuereinrichtung 11 kann dabei in das Bauteil 2 integriert oder separat zu diesem angeordnet sein.

Das erfindungsgemäße Verfahren zur Ermittlung einer Verpresskraft F1 und eines Brühdrucks p mit der in der Figur 1 dargestellten erfindungsgemäßen Kaffeezubereitungseinrichtung 1 funktioniert dabei wie folgt:
Zunächst wird im Verfahrensschritt I gemahlener Kaffee, d. h. Kaffeepulver 8, in den Brühtopf 6 eingefüllt. Anschließend wird im Verfahrensschritt II die Brühkammer 7 durch Eintauchen des Stößels 5 geschlossen sowie im Verfahrensschritt III der Brühtopf 6 in Richtung des Stößels 5, d. h. entsprechend der Figur 1 nach oben, verstellt, bis eine vordefinierte Verpresskraft F1 erreicht und an der Kraftmesseinrichtung 3 erfasst wird. Ist die Verpresskraft F1 erreicht, hat das Kaffeepulver 8 einen vordefinierten Komprimierungszustand erreicht. Anschließend wird im Verfahrensschritt IV Wasser mittels der Wasserpumpe 10 über den Wasserzulauf 9 in die Brühkammer 7 eingeleitet, woraufhin sich in der Brühkammer 7 ein Brühdruck p aufbaut. Dieser Brühdruck p erhöht die auf den Stößel 5 einwirkende Kraft auf die Gesamtkraft F2, welche dann im Verfahrensschritt V an der Kraftmesseinrichtung 3 erfasst wird. Die an der Kraftmesseinrichtung 3 erfasste Gesamtkraft F2 bildet somit die Summe aus der Verpresskraft F1 und der durch den Brühdruck p zusätzlich erzeugten Kraft. Um nun die durch den Brühdruck p zusätzlich erzeugte Kraft ermitteln zu können, bildet die Auswerte-/Steuereinrichtung 11 im Verfahrensschritt VI eine Differenz F2 - F1, der von der Kraftmesseinrichtung 3 gemessenen Kräfte F2, F1. Durch die bekannte Fläche A des Stößels 5 kann nun der in der Brühkammer 7 herrschende Brühdruck p als Quotient aus der Differenz der beiden Kräfte F2 - F1 und der Fläche A ermittelt werden.

Mit dem erfindungsgemäßen Verfahren ist auch eine Steuerung einer Verstellbewegung des Brühtopfes 6 und/oder einer Leistung bzw. Förderleistung der Wasserpumpe 10 in Abhängigkeit des mittels des erfindungsgemäßen Verfahrens ermittelten Brühdrucks p möglich. So kann beispielsweise bei einem Brühdruck p, der oberhalb eines vordefinierten Grenzbrühdrucks liegt, die Leistung der Wasserpumpe 10 und damit die Wasserzufuhr reduziert und/oder der Brühtopf 6 leicht nach unten gefahren werden.

Die Auswerte-/Steuereinrichtung 11 kann darüber hinaus die Verpresskraft F1 in Abhängigkeit des ermittelten Brühdrucks p steuern. Ebenfalls ist denkbar, dass die Auswerte-/Steuereinrichtung 11 einen Mahlgrad des Kaffeepulvers 8 in Abhängigkeit des ermittelten Brühdrucks p und/oder eine Mahlmenge an Kaffeepulver 8 in Abhängigkeit des ermittelten Brühdrucks p steuert.

Mit dem erfindungsgemäßen Verfahren ist es somit möglich, die Verpresskraft F1 direkt und deutlich genauer zu messen und so die Kaffeequalität zu verbessern. Durch die exakt ermittelbare Verpresskraft F1 und den ebenfalls exakt und einfach ermittelbaren Brühdruck p kann man durch Änderung weitere Parameter, beispielsweise eine Brühgeschwindigkeit, eine Wasserzufuhr, einen Mahlgrad, den Brühdruck p, bzw. die Brühung, etc. beeinflussen.

### Bezugszeichen

- 1: Kaffeezubereitungseinrichtung
- 2: Bauteil, insbesondere ein Gehäuse
- 3: Kraftmesseinrichtung
- 4: vordefinierte Richtung
- 5: Stößel
- 6: Brühtopf
- 7: Brühkammer
- 8: Kaffeepulver
- 9: Wasserzulauf
- 10: Wasserpumpe
- 11: Auswerte-/Steuereinrichtung
- 12: Kaffeekanal
- 13: Sieb
- 14: Ringdichtung

- I - VI: Verfahrensschritte

## Patentansprüche

1. Kaffeezubereitungseinrichtung (1),
- mit einem Bauteil (2), insbesondere einem Gehäuse, und einem daran über eine Kraftmesseinrichtung (3) angeordneten Stößel (5),
- mit einem in einer vordefinierten Richtung (4) verstellbaren Brühtopf (6), in welchen der Stößel (5) eingreift,
- wobei der Stößel (5) und der Brühtopf (6) eine Brühkammer (7) begrenzen,
- wobei der Brühtopf (6) einen in die Brühkammer (7) führenden Wasserzulauf (9) aufweist, über welchen mit Druck beaufschlagtes Wasser in die Brühkammer (7) einleitbar ist,
- wobei die Kraftmesseinrichtung (3) zur Erfassung einer bei einem Verstellen des Brühtopfes (6) in der vordefinierten Richtung (4) auf den Stößel (5) zu auftretenden und auf in der Brühkammer (7) angeordnetes Kaffeepulver (8) einwirkenden Verpresskraft F1 und einer durch ein anschließendes Einleiten von druckbeaufschlagtem Wasser in die Brühkammer (7) auf den Stößel (5) wirkenden Gesamtkraft F2 ausgebildet ist,
- mit einer Auswerte-/Steuereinrichtung (11), die derart ausgebildet ist, dass sie über eine Differenz F2 - F1 der von der Kraftmesseinrichtung (3) gemessenen Kräfte F2, F1 und einer der Brühkammer (7) zugewandten Fläche (A) des Stößels (5) einen Brühdruck p = (F2-F1)/A in der Brühkammer (7) ermittelt.

2. Kaffeezubereitungseinrichtung nach Anspruch 1,
**dadurch gekennzeichnet,**
**dass** in dem Stößel (5) ein Kaffeekanal (12) angeordnet ist, der über ein Sieb (13) mit der Brühkammer (7) verbunden ist.

3. Kaffeezubereitungseinrichtung nach Anspruch 1 oder 2,
**dadurch gekennzeichnet,**
**dass** der Stößel (5) über eine Ringdichtung (14) gegenüber einer Innenwand des Brühtopfes (6) abgedichtet ist.

4. Kaffeezubereitungseinrichtung nach einem der vorhergehenden Ansprüche,
**dadurch gekennzeichnet,**
**dass** die Kraftmesseinrichtung (3) als Wägezelle oder als Dehnungsmessstreifen ausgebildet ist.

5. Kaffeezubereitungseinrichtung nach einem der vorhergehenden Ansprüche,
**dadurch gekennzeichnet,**
**dass** die Auswerte-/Steuereinrichtung (11) derart ausgebildet ist, dass sie eine Verstellbewegung des Brühtopfes (6) in Abhängigkeit des ermittelten Brühdrucks p steuert.

6. Kaffeezubereitungseinrichtung nach einem der vorhergehenden Ansprüche,
**dadurch gekennzeichnet,**
**dass** die Auswerte-/Steuereinrichtung (11) derart ausgebildet ist, dass sie über eine Wasserpumpe (10) eine Zufuhr von Wasser in die Brühkammer (7) in Abhängigkeit des ermittelten Brühdrucks p steuert.

7. Verfahren zur Ermittlung einer Verpresskraft F1 und eines Brühdrucks p in einer Brühkammer (7) einer Kaffeezubereitungseinrichtung (1) nach einem der vorhergehenden Ansprüche, bei dem
- Kaffeepulver (8) in den Brühtopf (6) eingefüllt wird,
- die Brühkammer (7) durch Eintauchen des Stößels (5) in den Brühtopf (6) geschlossen wird,
- der Brühtopf (6) in der vordefinierten Richtung (4) gegen den Stößel (5) verstellt wird, bis eine vordefinierte Verpresskraft F1 an der Kraftmesseinrichtung (3) erreicht wird,
- anschließend Wasser über den Wasserzulauf (9) in die Brühkammer (7) eingeleitet wird, wodurch die an der Kraftmesseinrichtung (3) gemessene Kraft auf eine Gesamtkraft F2 ansteigt,
- die Gesamtkraft F2 von der Kraftmesseinrichtung (3) erfasst wird,
- die Auswerte-/Steuereinrichtung (11) über eine Differenz F2 - F1 der von der Kraftmesseinrichtung (3) gemessenen Kräfte F2, F1 und einer der Brühkammer (7) zugewandten Fläche A des Stößels (5) einen Brühdruck p = (F2-F1)/A in der Brühkammer (7) ermittelt.

8. Verfahren nach Anspruch 7,
**dadurch gekennzeichnet,**
**dass** die Auswerte-/Steuereinrichtung (11) eine Verstellbewegung des Brühtopfes (6) in Abhängigkeit des ermittelten Brühdrucks p steuert.

9. Verfahren nach Anspruch 7 oder 8,
**dadurch gekennzeichnet,**
**dass** die Auswerte-/Steuereinrichtung (11) eine Wasserzufuhr in die Brühkammer (7) in Abhängigkeit des ermittelten Brühdrucks p steuert.

10. Verfahren nach einem der Ansprüche 7 bis 9,
**dadurch gekennzeichnet,**
**dass** die Auswerte-/Steuereinrichtung (11) die Verpresskraft F1 in Abhängigkeit des ermittelten Brühdrucks p steuert.

11. Verfahren nach einem der Ansprüche 7 bis 10,
**dadurch gekennzeichnet,**
**dass** die Auswerte-/Steuereinrichtung (11) einen Mahlgrad des Kaffeepulvers (8) in Abhängigkeit des ermittelten Brühdrucks p steuert.

12. Verfahren nach einem der Ansprüche 7 bis 11,
**dadurch gekennzeichnet,**
**dass** die Auswerte-/Steuereinrichtung (11) eine Mahlmenge an Kaffeepulver (8) in Abhängigkeit des ermittelten Brühdrucks p steuert.
